# FASCICULE DE BREVET EUROPEEN

(11) **EP 0 488 457 B1**
(45) Date de publication et mention de la délivrance du brevet: **31.01.1996**
(21) Numéro de dépôt: 91203056.6
(22) Date de dépôt: 22.11.1991
(51) Int. Cl.: H04N 5/18

(54) **Dispositif d'alignement pour signal en bande de base**
Vorrichtung zum Klemmen eines Grundbandsignals
Device for clamping a baseband signal

(30) Priorité: 30.11.1990 FR 9015027
(43) Date de publication de la demande: 03.06.1992
(73) Titulaire: PHILIPS ELECTRONIQUE GRAND PUBLIC, F-92150 Suresnes (FR); Philips Electronics N.V., NL-5621 BA Eindhoven (NL)
(72) Inventeur: Gris, Joel, Société Civile S.P.I.D., F-75008 Paris (FR); Legendre, Michel, Société Civile S.P.I.D., F-75008 Paris (FR)
(74) Mandataire: Caron, Jean

(56) Documents cités:
- EP-A- 0 235 587
- EP-A- 0 281 175
- EP-A- 0 341 326
- EP-A- 0 360 918
- FR-A- 2 133 461

## Description

La présente invention a pour objet un dispositif d'alignement pour aligner la composante continue d'un signal en bande de base dont la structure comporte pour chaque ligne d'image une information d'alignement pendant un intervalle de temps dit fenêtre d'alignement, le dit dispositif comportant une boucle commandée par un échantillonneur bloqueur pour échantillonner le signal de sortie pendant la dite fenêtre et comportant des moyens de génération pour générer un signal de correction à partir de l'échantillonnage, les dits moyens de génération étant essentiellement constitués d'un condensateur de capacité C connecté en série avec la résistance interne R de l'échantillonneur bloqueur pour constituer un circuit RC d'échantillonnage.

Un tel dispositif s'applique notamment à des signaux de télévision du type D2MAC et il peut être utilisé par exemple dans un démodulateur pour réseau de transmission et/ou de distribution.

Un dispositif d'alignement connu est constitué d'un condensateur dont la tension de charge est conservée telle quelle comme correction apportée au signal mais un tel dispositif n'est pas satisfaisant ainsi qu'il est exposé dans la demande de brevet FR-A-2 633 473. Dans ce document, un dispositif est décrit lequel propose l'utilisation de la période duo-binaire du signal D2MAC pour allonger la durée de l'échantillonnage; de plus une partie du traitement de l'alignement y est effectuée dans le mode digital ce qui n'est pas économique industriellement.

Un autre dispositif d'alignement est connu de la demande de brevet FR-A-2.133.461. Le dispositif de ce document est constitué d'un condensateur qui est chargé pendant les fenêtres à une tension représentant le niveau de noir, et dont la tension de charge est conservée telle quelle pendant une ligne, reprise et lissée par un amplificateur et en fin de compte ajoutée en chargeant par sauts discrets, pendant les fenêtres, un condensateur qui est placé en série dans le conducteur de signal.

Une difficulté majeure de l'opération d'alignement, ou clamp, avec des signaux du type D2MAC provient du fait que la période d'échantillonnage est très courte (750 nanosec) et de ce qu'il y a plusieurs clamps en cascade ce qui provoque un "bruit de clamp".

La présente invention a pour objet de supprimer ces inconvénients avec des moyens particulièrement économiques adaptés aux grandes séries du marché grand public.

Selon la présente invention, le signal étant de type D2MAC et la dite fenêtre ayant une durée de sensiblement 0,75 µS, le circuit RC d'échantillonnage a une constante de temps sensiblement égale à la durée de la dite fenêtre, et le dispositif comprend un ensemble générateur de rampe dont l'impédance d'entrée est telle que la connexion entre l'ensemble générateur de rampe et le circuit RC n'intervient pas dans le comportement du circuit RC, et de constante de temps supérieure à la durée d'une ligne pour, à partir de la valeur de la charge du seul condensateur du dit circuit RC, générer le dit signal de correction dont la valeur absolue est progressivement croissante pendant toute la durée d'une ligne, et un additionneur pour additionner en continu durant chaque ligne le dit signal de correction au signal d'entrée et ainsi fournir le signal de sortie.

Ainsi la correction apportée est volontairement incomplète et progressive, on dit que le clamp est "mou", du fait que premièrement durant la fenêtre le condensateur ne se charge que d'une partie de la valeur de la différence de tension existante entre le signal de sortie et la charge précédente du condensateur, deuxièmement cette valeur partielle n'est ajoutée que progressivement au signal. La valeur-cible n'est en fait jamais atteinte puisque la constante de temps de l'ensemble générateur de rampe est supérieure à la durée d'une ligne, soit 64 µsec. On notera que du fait de la forte impédance de l'ensemble générateur de rampe le condensateur ne peut pas se décharger pendant la durée de la ligne et ainsi en plus de la fonction d'échantillonnage pendant la durée de chaque fenêtre le condensateur a aussi une fonction de mémorisation pour la commande du générateur de rampe pendant le reste de la durée de chaque ligne.

Il est vrai que le brevet EP-A-0 360 918 divulgue un générateur de rampe dont le signal est ajouté au signal vidéo. Néanmoins ce dispositif utilise un signal d'erreur issu d'une porte logique, et le signal dont l'erreur de niveau est mesurée est un signal numérique. Le problème technique est donc différent de celui de la présente invention.

Dans un mode de réalisation préférée, le dit ensemble générateur de rampe comporte dans l'ordre :
- un ensemble constitué d'un amplificateur limiteur puis d'un atténuateur dont les gains sont élevés et opposés,
- et un générateur de rampe proprement dit, et en ce que la dite forte impédance est principalement localisée dans l'ampli-limiteur.

Une valeur de gain de l'ordre de 1.000 est envisageable de telle sorte que, si un "dirac", c'est-à-dire une impulsion parasite de forte amplitude, se produit pendant la période d'échantillonnage, la boucle de correction n'en est pratiquement pas affectée car l'ampli est saturé.

La boucle peut encore comporter un filtre passe-bas, par exemple 0-5 MHz.

Un tel dispositif est donc avantageusement réalisable avec exclusivement des moyens analogiques, ce qui est économique industriellement.

La présente invention sera bien comprise au vu de la description non limitative d'un mode de réalisation illustré par des dessins.

La figure 1 représente le schéma global d'un dispositif d'alignement conforme à l'invention.

La figure 2 représente un exemple de réalisation préférentiel d'un ensemble générateur de rampe.

La figure 3 est un diagramme tension/temps avec des valeurs significatives pour montrer le fonctionnement du dispositif des figures 1 et 2.

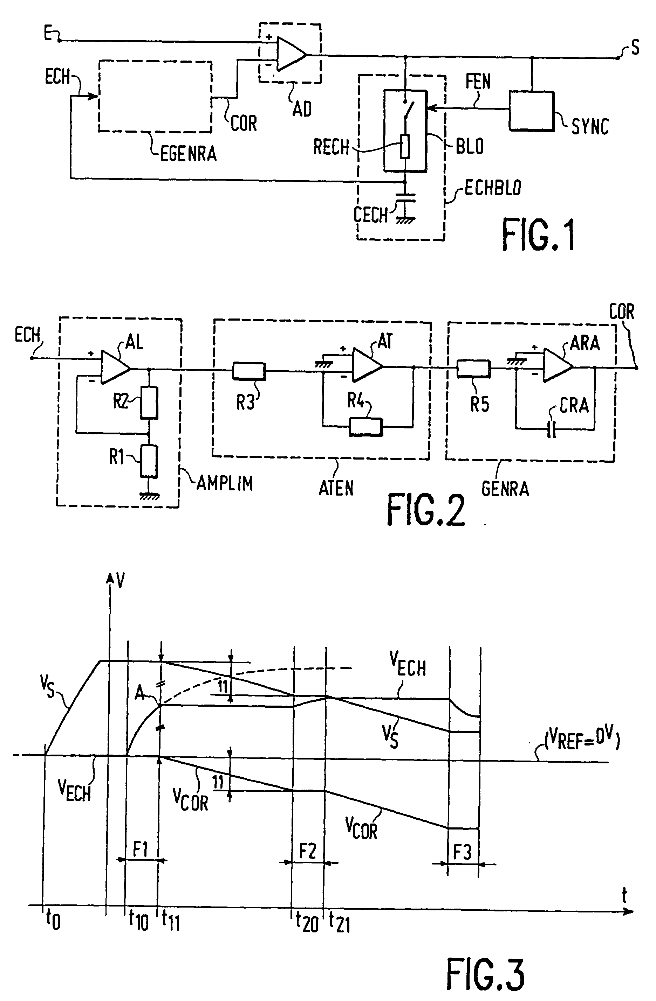

La figure 1 représente un dispositif d'alignement comportant une entrée E, une sortie S, un additionneur (AD), un échantillonneur bloqueur (ECHBLO) et un ensemble générateur de rampe (EGENRA).

L'échantillonneur bloqueur comporte un condensateur d'échantillonnage (CECH) et un bloqueur (BLO) essentiellement constitué d'un interrupteur commandé par un signal de fenêtre (FEN) actif pendant la fenêtre d'alignement. Le signal (FEN) est obtenu avec précision au moyen d'un circuit de synchronisation (SYNC) connu, tel que le processeur vidéo n°DMA2270 de chez ITT. Le circuit (SYNC) n'est pas spécialement dédié au dispositif d'alignement car, par exemple au sein d'un décodeur, les informations de synchronisation sont aussi utilisées pour d'autres fonctions que la fonction d'alignement.

Le circuit (BLO), que l'on trouve dans le commerce par exemple sous la référence DG540 chez Siliconics, a une résistance interne (RECH) de 100 Ohm. Avec une capacité (CECH) choisie pour une valeur de 10 nf, il en résulte un circuit RC dont la constante de temps est de l'ordre de 1 µsec, c'est-à-dire sensiblement égale à la durée de la fenêtre d'alignement en D2MAC soit 0,75 µsec.

De ce fait, à la fin de la fenêtre, la tension aux bornes du condensateur (CECH) a été modifiée d'à peu près la moitié de la différence de tension pré-existante entre la sortie S et le condensateur (CECH).

La connexion (ECH) n'intervient pas dans le comportement du circuit RC car l'ensemble générateur de rampe (EGENRA) est choisi avec une impédance élevée. Pour la même raison, la capacité (CECH) ne se décharge pas pendant le temps qui sépare deux fenêtres successives. Entre deux fenêtres, c'est-à-dire pendant la durée d'une ligne soit 64 µsec en D2MAC, l'ensemble générateur de rampe génère un signal de correction (COR) dont la valeur absolue est progressivement croissante et aussi dépendante de la valeur de la charge de la capacité (CECH) transmise par la connexion (ECH).

La constante de temps de la progressivité de la rampe est choisie de telle sorte que la correction est progressive tout au long de la ligne et qu'elle est même incomplète à la fin d'une ligne dans le cas où l'on observe le fonctionnement du dispositif sur une seule ligne. En pratique la valeur maxi de la correction sera par exemple égale à 1/5 de la valeur du signal ECH. Il s'agit d'un choix délibéré pour obtenir un clamp mou qui se révèle très efficace lors d'un fonctionnement réel sur plusieurs lignes comme expliqué ci-après.

La figure 2 représente un ensemble générateur de rampe (EGENRA de la figure 1) comportant un ampli-limiteur (AMPLIM), un atténuateur (ATEN), et un générateur de rampe (GENRA). L'ampli-limiteur (AMPLIM) qui reçoit le signal ECH est constitué d'un circuit (AL), par exemple un LF 355 de chez National, connecté comme représenté avec deux résistances R2 et R1 de valeurs respectives 726 KOhm et 1 KOhm. Ainsi on obtient une haute impédance et un gain de l'ordre de 1.000.

L'atténuateur (ATEN) est constitué d'un circuit (AT), par exemple un LF 355 de chez National, connecté comme représenté avec deux résistances R4 et R3 de valeurs respectives 10KOhm et 215 KOhm, ainsi on obtient un gain de l'ordre de -20/800. Le générateur de rampe (GENRA) est constitué d'un circuit (ARA), par exemple un LM 6361 de chez National, connecté comme représenté avec la capacité (CRA) d'une valeur de 220 nf, et la résistance R5 de 50 Kohm.

Les valeurs des composants sont évidemment indicatives, et d'autres valeurs conviendraient dans la mesure où elles permettraient d'obtenir un fonctionnement de la boucle de correction similaire à celui expliqué ci-après.

La figure 3 est un diagramme tension/temps qui explicite le fonctionnement du dispositif d'alignement décrit dans les figures 1 et 2.

L'échelle des temps couvre plusieurs lignes avec notamment 3 fenêtres d'alignement successives F1, F2, F3 dont la durée a été exagérée pour la clarté de la figure.

Les variations de 3 tensions VS, VECH et VCOR sont représentées. VS est la composante continue du signal de sortie S. VECH est la tension existante aux bornes du condensateur CECH. VCOR est la tension de correction issue de l'ensemble générateur de rampe (EGENRA).

La figure explicite un cas simple à savoir qu'avant la date 'tₒ' le signal est supposé être aligné : Tension d'entrée = VS = VECH = VCOR = Tension de Référence (VREF), en général = 0 Volt.

A la date 'tₒ' apparaît en entrée un échelon de tension lequel se retrouve intégralement en sortie (VS) jusqu'à ce que le prochain échantillonnage soit effectué pendant la fenêtre F1 c'est-à-dire entre les dates t₁₀ et t₁₁. La durée de chaque fenêtre étant très courte, les tensions VS et VCOR sont représentées inchangées pendant ces périodes ce qui correspond assez à la réalité.

Par contre la tension VECH change compte-tenu du temps de réponse du circuit RC comme susdit de telle sorte qu'à la date t₁₁ la tension VECH au point A est de l'ordre de la moitié de la valeur de l'échelon, la tension VECH reste alors inchangée jusqu'au début de la fenêtre suivante, date t₂₀. Sur la base du signal VECH, à partir de la date t₁₁, le générateur de rampe génère la tension VCOR continuellement croissante en valeur absolue entre les dates t₁₁ et t₂₀ ce qui provoque dans l'additionneur AD la correction similaire du signal de sortie VS. A la date t₂₀, fenêtre F2, intervient l'échantillonnage suivant pendant lequel la tension VECH varie relativement peu dans le cas présent car les tensions VS et VECH à la date t₂₀ sont peu différentes l'une de l'autre. A partir de la date t₂₁, le générateur de rampe agit similairement à précédemment sur la base du signal VECH de sorte que le signal VCOR croit encore et que la tension de sortie VS continue à se rapprocher graduellement de la tension de référence recherchée jusqu'au prochain échantillonnage F3 et ainsi de suite.

Dans cet exemple simple, l'ampli-limiteur et l'atténuateur n'ont pas joué un rôle essentiel, tant s'en faut. Nous avons en effet supposé que l'échelon de tension avait une valeur de l'ordre de ± 5 mV d'où ± 2,5 mV pour VECH, puis 2,5 V en entrée de l'atténuateur et donc une correction maxi de l'ordre de 2 mV après la fenêtre F1.

Dans le cas d'un dirac se produisant pendant une période d'échantillonnage, par exemple tension VS égale à 1V pendant 1 µsec, l'ampli-limiteur est saturé et ne réagit plus dès que la tension VECH est supérieure à 5 mV de sorte que le signal de correction sera le même quel que soit VECH supérieur ou égal à 5 mV. Dans ce cas l'ampli-limiteur joue un rôle essentiel.

La description ci-dessus montre que le dispositif selon l'invention convient aussi bien pour un dirac, et pour un échelon de tension lequel serait dû par exemple à des capacités parasites telles qu'il s'en produit souvent dans des lignes de transmission.

Le dispositif convient bien aussi pour les variations basses fréquences par exemple la ronflette secteur de 50 Hz, ou 60 Hz dans certains pays. En effet, le calcul montre qu'une ronflette de ± 50mV à 50 Hz correspond à un échelon d'au maximum 1mV entre deux fenêtres d'échantillonnage; cette valeur est facilement corrigée, comme susdit, par le dispositif décrit conforme à l'invention.

Avantageusement, un filtre passe-bas 0-5 MHz, non représenté, peut être inclus au départ de la boucle de correction pour éliminer les hautes fréquences du D2MAC (0-8,2 MHz).

Le dispositif d'alignement est entièrement réalisable avec des moyens analogiques, c'est pourquoi il peut être avantageux compte-tenu des dispersions d'approvisionnement et de fabrication d'insérer un simple potentiomètre de 100 KOhm, par exemple en lieu et place de la résistance R5, comme circuit de réglage de fabrication.

## Revendications

1. Dispositif d'alignement pour aligner la composante continue d'un signal en bande de base dont la structure comporte pour chaque ligne d'image une information d'alignement pendant un intervalle de temps dit fenêtre d'alignement, le dit dispositif comportant une boucle commandée par un échantillonneur bloqueur (ECHBLO) pour échantillonner le signal de sortie (S) pendant la dite fenêtre et comportant des moyens de génération pour générer un signal de correction à partir de l'échantillonnage, les dits moyens de génération étant essentiellement constitués d'un condensateur (CECH) de capacité C connecté en série avec la résistance interne R de l'échantillonneur bloqueur (ECHBLO) pour constituer un circuit RC d'échantillonnage, caractérisé en ce que, le signal étant de type D2MAC et la dite fenêtre ayant une durée de sensiblement 0,75 µS, le circuit RC d'échantillonnage a une constante de temps sensiblement égale à la durée de la dite fenêtre, et le dispositif comprend un ensemble générateur de rampe (EGENRA) dont l'impédance d'entrée est telle que la connexion entre l'ensemble générateur de rampe et le circuit RC n'intervient pas dans le comportement du circuit RC, et de constante de temps supérieure à la durée d'une ligne pour, à partir de la valeur de la charge du seul condensateur (CECH) du dit circuit RC, générer le dit signal de correction (ECH) dont la valeur absolue est progressivement croissante pendant toute la durée d'une ligne, et un additionneur (AD) pour additionner en continu durant chaque ligne le dit signal de correction (COR) au signal d'entrée (E) et ainsi fournir le signal de sortie.

2. Dispositif d'alignement selon la revendication 1, caractérisé en ce que le dit ensemble générateur de rampe comporte dans l'ordre :
- un ensemble constitué d'un amplificateur limiteur (AMPLIM) puis d'un atténuateur (ATEN) dont les gains sont inverses l'un de l'autre,
- et un générateur de rampe (GENRA) proprement dit.

3. Dispositif d'alignement selon la revendication 2 caractérisé en ce que les dits gains sont de l'ordre de 1000.

4. Dispositif d'alignement selon la revendication 2, caractérisé en ce que l'échantillonneur bloqueur a une constante de temps de sensiblement 10⁻⁶ sec, l'amplificateur limiteur a un gain de sensiblement 1.000 et l'atténuateur de -0,001, et en ce que l'amplificateur limiteur limite le signal de correction à sensiblement 5mV/ligne.

5. Dispositif d'alignement selon quelconque des revendications précédentes, caractérisé en ce que ladite boucle comporte en outre en entrée un filtre passe-bas.

6. Dispositif d'alignement selon l'une quelconque des revendications précédentes, caractérisé en ce qu'il est entièrement constitué de moyens analogiques.

## Patentansprüche

1. Vorrichtung zum Klemmen des Gleichstromanteils eines Basisbandsignals, dessen Struktur für jede Bildzeile während eines als Klemmfenster bezeichneten Zeitintervalls, eine Klemminformation aufweist, wobei die genannte Vorrichtung eine von einer Abtast-und-Halte-Schaltung (ECHBLO) zum Abtasten des Ausgangssignals (S) innerhalb des genannten Fensters gesteuerte Schleife sowie Mittel zur Erzeugung eines Korrektursignals im Anschluß an die Abtastung aufweist, wobei die genannten Mittel zur Signalerzeugung im wesentlichen aus einem Kondensator (CECH) mit einer Kapazität C bestehen, der zum Bilden eines RC-Abtastkreises mit dem Innenwiderstand R der Abtast-und-Halte-Schaltung (ECHBLO) in Reihe geschaltet ist, dadurch gekennzeichnet, daß es sich bei dem Signal um ein Signal vom Typ D2MAC handelt, das genannte Fenster eine Dauer von ungefähr 0,75 µs besitzt und die Zeitkonstante des RC-Kreises ungefähr der Aktivierungszeit des genannten Fensters entspricht, und daß die Vorrichtung eine Sägezahngenerator-Einheit (EGENRA) aufweist, deren Eingangsimpedanz derart ist, daß die Verbindung zwischen der Sägezahngeneratoreinheit und dem RC-Kreis das Verhalten des RC-Kreises nicht beeinträchtigt und die Zeitkonstante länger ist als die Zeilendauer, um auf der Basis das Ladungswertes des Kondensators des genannten RC-Kreises das genannte Korrektursignal zu erzeugen, dessen absoluter Wert im Verlaufe der Zeilendauer progressiv ansteigt; sowie einen Addierer (AD), der während jeder Zeile ununterbrochen das genannte Korrektursignal (COR) zu dem Eingangssignal (E) addiert und somit das Ausgangssignal liefert.

2. Klemmvorrichtung nach Anspruch 1, dadurch gekennzeichnet, daß sich die genannte Sägezahngenerator-Einheit in der untenstehenden Reihenfolge die nachfolgenden Schaltungselemente aufweist:
- eine Einheit, bestehend aus einem Verstärkungsbegrenzer (AMPLIM) und einem Dämpfungsglied (ATEN), deren Verstärkungen einander entgegengesetzt sind,
- sowie einen eigentlichen Sägezahngenerator (GENRA).

3. Klemmvorrichtung nach Anspruch 2, dadurch gekennzeichnet, daß die genannten Verstärkungen von der Größenordnung 1000 sind.

4. Klemmvorrichtung nach Anspruch 2, dadurch gekennzeichnet, daß die Abtast-und-Halte-Schaltung eine Zeitkonstante von ca. 10⁻⁶ s aufweist, der Verstärkungsbegrenzer eine Verstärkung von etwa 1.000 hat, während die Leistung des Dämpfungsglieds bei -0,001 liegt und daß der Verstärkungsbegrenzer das Korrektursignal auf ca. 5 mV/Zeile begrenzt.

5. Klemmvorrichtung bach einem der vorstehenden Ansprüche, dadurch gekennzeichnet, daß die genannte Schleife außerdem am Eingang ein Tiefpaßfilter aufweist.

6. Klemmvorrichtung nach einem der vorstehenden Ansprüche, dadurch gekennzeichnet, daß sie vollständig aus analogen Schaltungselementen besteht.

## Claims

1. A clamping device for clamping the DC component of a baseband signal whose structure comprises, for each picture line, a clamping information component during a time interval referred to as clamping window, said device comprising a loop controlled by a block sampler (ECHBLO) for sampling the output signal (S) during said window, and generation means for generating a correction signal from the sampling operation, said generation means being essentially constituted by a capacitor (CECH) having a capacitance C connected in series with the internal resistance R of the block sampler (ECHBLO) for constituting an RC sampling circuit, characterized in that, with the signal being of the D2MAC type and said window having a duration of substantially 0.75 µs, the RC sampling circuit has a time constant which is substantially equal to the duration of said window, and the device comprises a ramp generator assembly (EGENRA) whose input impedance is such that the connection between the ramp generator assembly and the RC circuit does not influence the behaviour of the RC circuit, and has a time constant which is larger than the period of a line for generating, from the value of the charge of the single capacitor (CECH) of said RC circuit, said correction signal (ECH) whose absolute value progressively increases throughout a line period, and an adder (AD) for continuously adding said correction signal (COR) to the input signal (E) during each line and thus supplying the output signal.

2. A clamping device as claimed in Claim 1, characterized in that said ramp generator assembly comprises, in this order:
- an assembly constituted by a limiter amplifier (AMPLIM) followed by an attenuator (ATEN) whose gains are inverse to each other,
- and a ramp generator (GENRA).

3. A clamping device as claimed in Claim 2, characterized in that said gains are of the order of 1000.

4. A clamping device as claimed in Claim 2, characterized in that the block sampler has a time constant of substantially 10⁻⁶ sec, the limiter amplifier has a gain of substantially 1000 and the attenuator of -0.001, and in that the limiter amplifier limits the correction signal to substantially 5 mV/line.

5. A clamping device as claimed in any one of the preceding Claims, characterized in that said loop also comprises a low-pass filter at the input.

6. A clamping device as claimed in any one of the preceding Claims, characterized in that it is entirely constituted by analog means.
